(19) Europäisches Patentamt European Patent Office Office européen des brevets

(11) **EP 3 628 830 A1**

(12) **EUROPEAN PATENT APPLICATION**

(43) Date of publication:
01.04.2020 Bulletin 2020/14

(21) Application number: **19198545.6**

(22) Date of filing: **20.09.2019**

(51) Int Cl.:
*F01K 7/00* (2006.01)  *F01K 27/00* (2006.01)
*F03B 17/02* (2006.01)  *F22B 1/00* (2006.01)
*F01K 3/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2018 NP 68118**

(71) Applicant: **K.C. Sudarshan**
**32814 Kapilvastu (NP)**

(72) Inventor: **K.C., Sudarshan**
**32814 Kapilvastu (NP)**

(74) Representative: **Lapienis, Juozas**
**MSP Europe UAB**
**21-92 Seimyniskiu Str.**
**09236 Vilnius (LT)**

(54) **PRODUCTION OF MECHANICAL/ELECTRICAL ENERGY FROM HEAT ENERGY WITH AND BY THE USE OF BUOYANCY FACTOR ON EVAPORATION OR SUBLIMATION AND CONDENSATION**

(57) There are various source of heat energy. Amongst the various sources Solar energy, waste heat form garbage, waste heat from transformers, waste heat from chemical reactions, waste heat from plant and machinery, heat from geo-thermal or the vast heat energy lying in the seas and oceans are some of the major ones which are free and unused. Apart from these, we can also produce heat energy from fuels like fossil fuels, hydrogen gas, forest products etc. A lot of heat energy is being wasted and though converted to mechanical or electric energy it is not that efficient. However, using the evaporation or sublimation and condensation process brought about through difference in temperature and the use of buoyancy factor to increase the efficiency of the energy production, the heat energy can be converted to mechanical or electrical energy in excess of hundred percent. Moreover, heat energy obtained from hydrolysis of some chemicals like salts or hydroxides and their dehydration for reuse or the heat stored as latent heat on melting of salts can be utilized for huge storage of energy for some months or more and use it through this invention method. The energy lying in the water under the oceans during winter can be easily utilized for production of huge energy when there are very low (freezing) temperatures on the surface of the earth.

Fig. 1

EP 3 628 830 A1

**Description**

**Field of the invention**

The invention is related to the generation of mechanical or electrical power from thermal energy including solar energy or heat energy lying in water in the ocean by evaporation/sublimation and condensation cycle brought by the difference in temperatures with liquids (or even solids or gases) based on the adjustable temperatures in a closed environment and the use of buoyancy factor to increase the efficiency of the energy production.

**Background of the invention**

There has been so long the heat energy has been brought into use. From the beginning of steam engine to the latest diesel engine the heat energy has been being converted to mechanical or electrical energy. There are internal and external combustion engine. Steam engine is the external combustion engine and diesel and petrol engines are internal combustion engines. In internal combustion engines the thermal energy of the fuel is converted to mechanical or electrical energy as per the laws of thermodynamics that considers the temperature-pressure-volume relationships. However under the external combustion engine, steam is generated and used to run turbine or develop Rankin cycle. Coal or other heat is used for steam generation including solar energy.

In some thermal energy conversion to electrical or mechanical energy, external heat energy is utilized as given below:
As per US patent US9297366B2 the ions generated through photo voltaic is transferred from high concentration to low concentration of steam and reverted through thermal power by bringing back the low concentration steam to normal position.

Similarly, in US patent, US8794002B2, a working fluid is used as a heat exchanger and low pressure and high pressure area are created whereby the working fluid is directed from high pressure side to low pressure side and controlled at the working area where it is converted to mechanical energy.

As per US8011182B2A power generator utilizing gases and the gravitational force as efficiently as the buoyant force which act on an apparatus in a natural or man-made liquid medium and convert such forces into mechanical energy. The power generator includes methods for a plurality of weighted uniquely configured variable density containers which ascend and descend in a primarily vertical plane and which drive one or more chains, belts or conveyances with rotating sprockets or pulleys on horizontally aligned shafts in primarily a vertical arrangement upon such apparatus.

Solar panel only captures and converts into electrical energy the light energy from sun and requires the storage in the form of batteries during the hours when there is no sunlight like cloudy times or during night.

All these conversion methods have a theoretical efficiency of less than 65% and practically more less.

Most of the heat energy conversion methods use high temperature. As the petrol and diesel engine make the air to go above 2000 Deg. Celsius and the fuel is totally spent. Steam energy also requires the steam to go around 600 Degree Celsius. Even in other conversion systems, high temperatures are preferred. Due to the high temperature requirement, the heat energy with mild temperatures say less than 10 Deg. Celsius cannot be efficiently used.

Therefore, there is a need of invention or innovation where the low temperature heat energy could be brought in use with high efficiency. There is a need where the vast solar energy can be brought in use with less cost. There is a need where the easy storage of the energy can be done and converted to electrical energy on necessity. There is a need where a renewable solar energy can be brought in use to the extent. There is a need to meet the future energy crisis. There is a need to find the fin-tech system requirement of energy which could be equal to/more than the energy the whole world is using today. There is a need where the wasted energy and garbage can be brought to use. There is a need where clean energy can be highly adopted replacing the black energy. There is a need where solar energy can be harnessed to decrease the global warming. There is a need where the abundant solar or geo-thermal energy can be used to solve energy crises. There is a need where the heat energy lying in the seas and oceans can be exploited during winter where the temperatures on the surface are very low.

**Summary of the invention**

The generation of mechanical or electrical energy from heat energy through the process of evaporation or sublimation and condensation along with the application of buoyancy factor to increase the efficiency of the energy production whereby the vapor obtained through a liquid when boiled or solid when sublimed or gas when pressurized by the input of heat energy at required evaporating, boiling or sublimating temperature is allowed to rise at a higher level/s in a liquid such that due to buoyancy the vapor is accelerated above and thus the energy obtained is increased as the vapor rises to the height at which the turbine is kept immersed in the liquid and the gas passes through the turbine rotating it and the vapor is condensed by the help of liquid kept in the condenser the temperature of which under normal conditions, do not exceed the boiling/sublimating point of the liquid(or solid) inside the vessels that is to be evaporated or sublimed and condensed or the temperature of the vapor boiled, evaporated or sublimed or condensed through any other possible means.

As the vapor rises through the liquid in the liquid chamber it accelerates in upward direction and then rotates the turbine immersed in the liquid generating a energy that is equal to the weight of liquid equivalent to volume of the gas passing through the turbine multiplied by the height of the turbine. Moreover, the energy is also added up during the process of flow of vapor from evaporating medium to condensing medium on the turbine kept in vapor medium.

Any prevailing temperature differences of some degrees can be easily utilized, even low temperatures (say about zero deg and - 10 Degree Celsius or less) and energy be generated which is increased by the buoyancy factor. Due to the working of the technology even at low temperatures, easy energy storage medium can be used, say salts and hydroxides (e.g. NAOH) where thermal energy is stored during dehydration and obtained on their hydration or latent heat from salts stored in melting phase or even water below at ocean which is above 0 Degree Celsius where the temperature on the surface are freezing during winter acting as a natural storage. Or hot water sources natural or others also can be utilized as a storage source of thermal energy.

**Advantageous effects of the invention**

My invention can convert the low temperature heat energy to mechanical or electrical energy. It can convert more than 100% of the input heat energy to output without the expense of extra material or energy. It can harness the vast thermal energy from sun with ease and low cost simple technology which has become the bottleneck of bringing it in use. It can have easy storage mechanism where we can even store huge energy and utilize in need. With this technology we can store 100s of megawatts for months or more with low cost and ease. Such a low temperature output storage given by chemicals (e.g. salt or hydroxides hydration and dehydration etc.) can be transported without losing the energy stored. The wastes that can provide thermal energy could be best utilized. As the solar energy is a renewable and clean energy the huge energy can be best utilized and stored thereby reducing the consumption of black energy and the global energy as well. It finally helps to solve the future energy crisis to the extent. The vast energy lying in the ocean where the temperature of water below is above 0 Degree Celsius and the temperature on the surface are freezing during winter can be best utilized to generate electrical energy which had never been possible.

**Brief description of drawings**

Fig. 1 is an example embodiment of multiple towers for implementation of the process of generation of mechanical and electrical energy from heat energy using day sunlight and storage system for Night/Out of Sunlight/Winter.

Fig. 2 is an example embodiment of a single tower for implementation of a process of generation of mechanical and electrical energy from heat energy using only sunlight energy during the day.

Fig. 3 is an example embodiment of multiple towers for implementation of the process of generation of mechanical and electrical energy from heat energy using only sunlight energy during the day.

Fig. 4 is an example embodiment of multiple towers for implementation of the process of generation of mechanical and electrical energy from heat energy on frozen lakes/seas/ocean especially during winter (day and night).

Fig. 5 is an example embodiment of multiple towers for implementation of the process of generation of mechanical and electrical energy from heat energy on hot water areas (day/night and any season when hot water is available).

**Detailed description of the invention**

The invention uses the following parts/items:

Surface/Flat Vessels 1.

Liquid Chamber 2, 3, 4.

Gas Chamber5, 6, 7.

Liquid Turbine 8, 9, 10.

Gas Turbine 11.

Axle 12.

Generator 13.

Tower 14.

Vapor out Pipe 15.

Liquid inPipe 16.

Condenser in Pipe 17.

Condenser out Pipe 18.

Water in Pipe 19.

Water out Pipe 20.

Water pipe 21.

Hot water circulation pipe 22.

Liquid Re-input Section 23.

Washer 24, 25.

Vapor-Liquid Phase Valve 26.

Chamber Valves 27, 28.

Liquid Input Valve 29.

Liquid Output Valve 30.

Condenser 31.

Cylinder 32.

Multi pipes 33.

Pusher 34.

Chemical storage tank 35.

Heat generation Tank 36.

Motors 37, 38, 39.

Hot water reservoir 40.

Water Heater 41.

Water tank 42.

Dehydrating vessels 43.

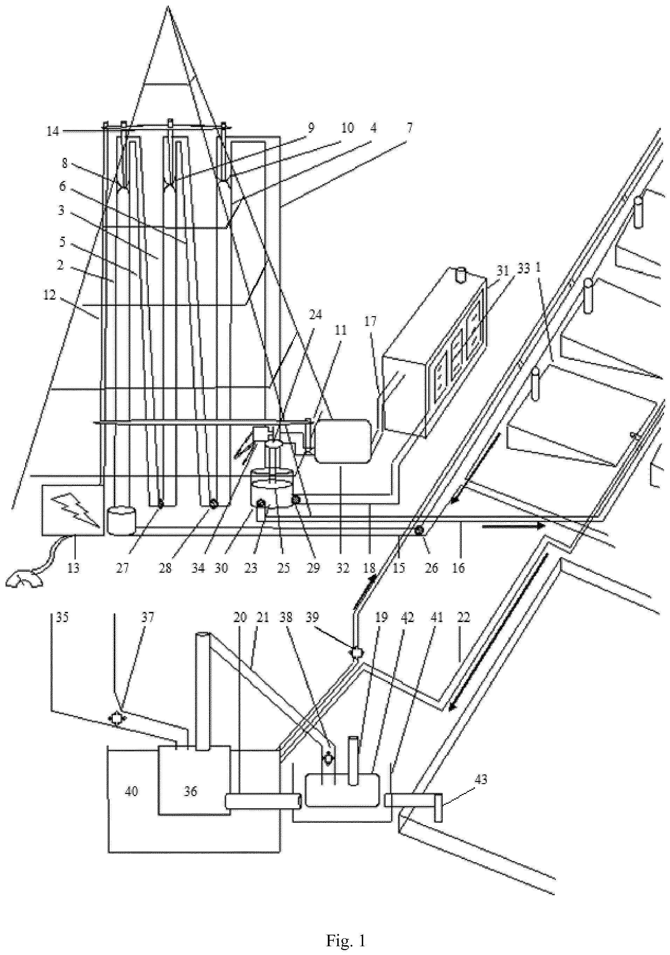

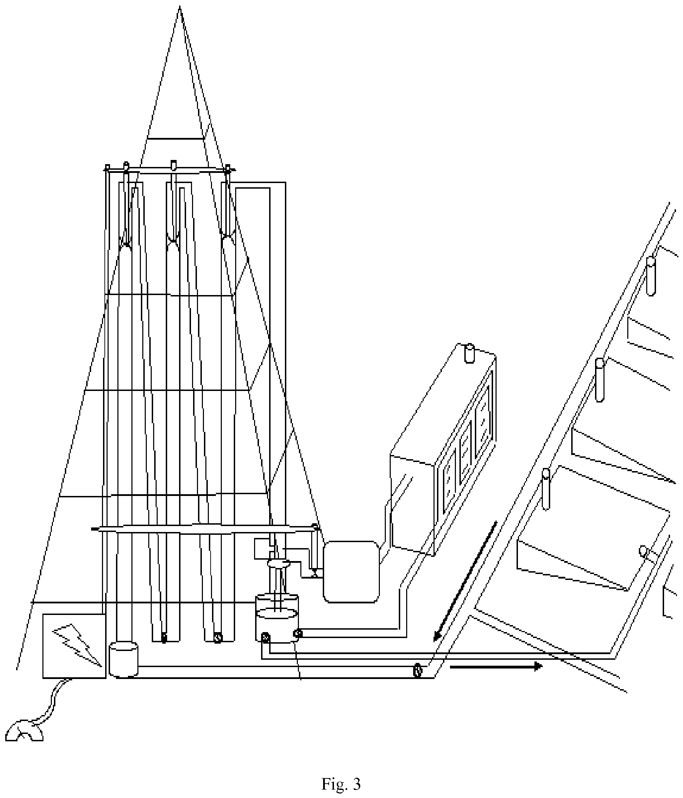

Fig. 1 is described with the nomenclature. Other figures [Fig. 1 -5] resembles each other mostly and described only on differences.

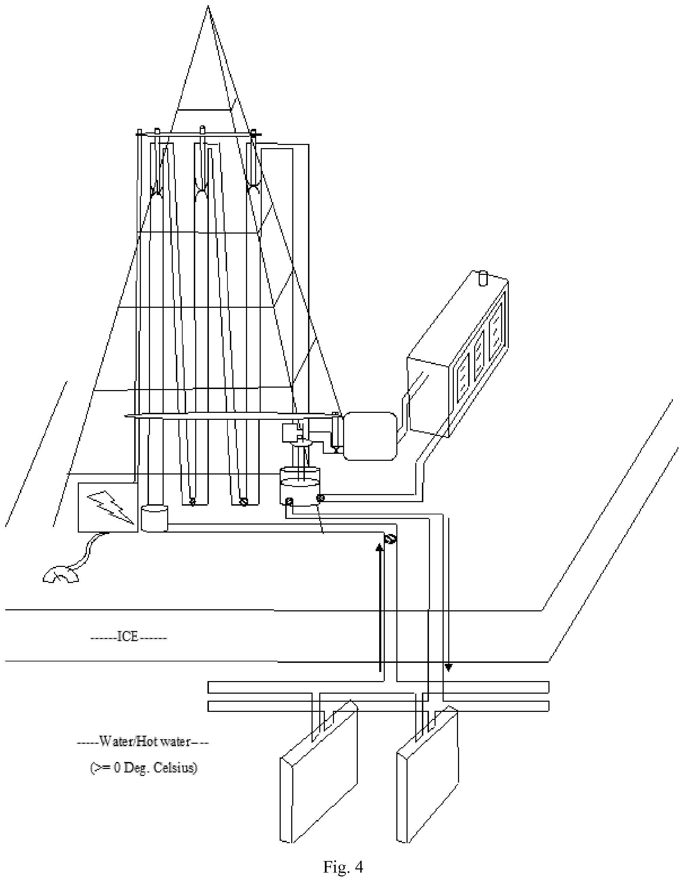

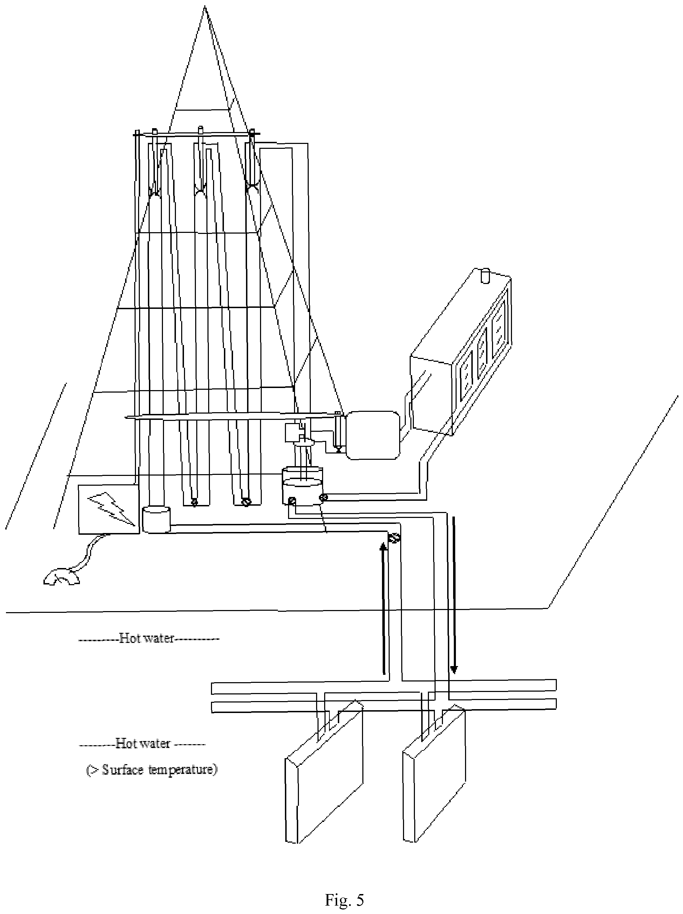

The Surface/Flat vessels 1 are the ones where the heating is required for evaporation or sublimation. Generally it is made in plain shape so that the heat from sun or hot water from heat storage medium or when dipped in ocean falls in the largest surface area. The shape of vessels however be changed according to the heat source applied. There is liquid inside the surface vessels. And the surface vessels 1 are kept such that it can be heated. So for solar energy they are kept facing towards the sunlight [Fig 1, 2, 3]. For energy from ocean or lakes water they are dipped inside the water below the ice surface in case of frozen upper surface [Fig. 4, 5].If the source of heat energy used can create high temperature then comparatively small surface area will also do, say heating by hydrogen gas, natural gas or other fuels etc. The vessels are connected to the Liquid Chamber 2 through the pipe 15 and Vapor-liquid phase valve 26. The liquid present in chambers may be same as inside the vessels or different. For the liquid in vessels 1 like pentene, butane etc that are not soluble in water, water can be used as liquid in the liquid chambers separated by valve but the liquid chambers must contain liquid to obtain buoyancy force.

At the top of the chamber there is a Liquid Turbine8 which is also immersed in the liquid. The top most part of the chamber is connected to the Gas Chamber5. For multiple Chambers [Fig. 1,3,4,5] the Gas Chamber 5 is connected to Liquid Chamber 3 through a valve 27. There is a turbine 9 at the top part of the chamber 3. Now, the Liquid chamber 3 is connected to next gas Chamber 6 which in turn is connected to Liquid Chamber 4 through a valve 28. As before, there is a turbine 10 on the top part of Liquid Chamber 4. The liquid chamber4 is finally connected to the Gas Chamber 7. Although a series of Liquid and Gas chambers can be added depending upon the temperature of the liquid in Liquid chambers and the temperature of vapor (i.e. B.P. of liquid)here we have considered only three for description.

All the turbines8, 9, 10are connected to the axle12 and axle12 to the generator13. The Axle and Chambers are all supported by tower14. At the below part of the gas chamber7, there is a liquid re-input section 23. And just above the liquid re-input section23, a next gas turbine 11 is present through which the gas flows to the condenser31 through cylinder 32. There is a gas turbine 11 which is also connected to the axle 12 and two valves 29 and 30 and a washer 25 in the liquid re-input section23. The pipes 17 and 18 are connected inward and outward the condenser 31 respectively. The washer 24 and 25 are joined with same upward and downward flow. Above the washer 24 and below the turbine 11 in gas chamber 7, there is a Pusher34 connected to an external circuit.

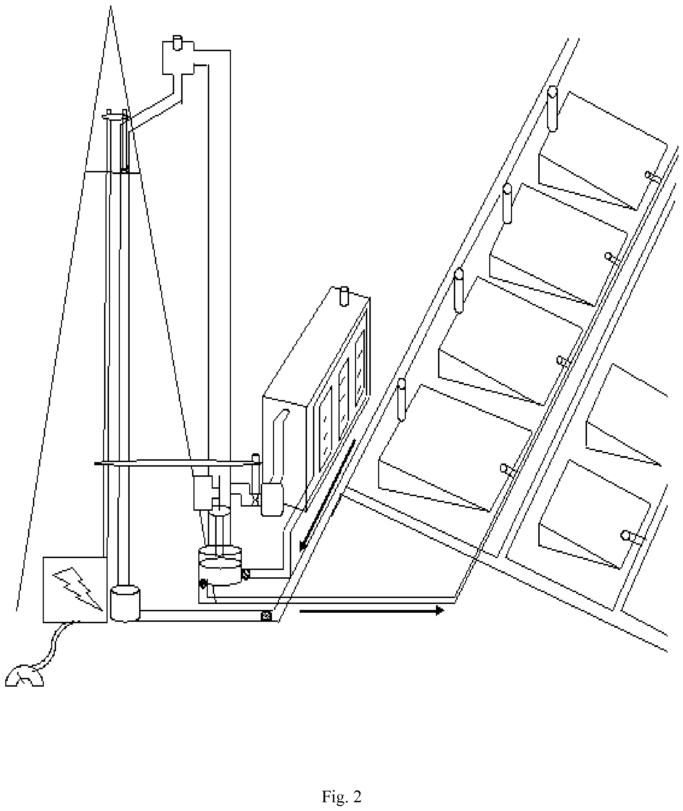

The condenser31connected with the final gas chamber 7 [Single gas Chamber for Fig.2] through cylinder 32andcondenser-in pipe 17contains a cooling liquid generally water where the multiple pipes33 are acting as an interface between the vapor and the cooling liquid. The multiple pipes in the condenser 31 is finally connected to the liquid Re-input section 23 through a condenser out pipe18. The liquid Re-input section 23 is finally connected to the surface vessel/s 1 through the pipe 16.

The axle 12 is the one which is connected to the generator 13 that converts the rotational mechanical energy of turbine/axle to electrical energy.

Moreover, for the production of electricity without the use of sunlight, where hot water obtained from chemicals like NAOH hydration or molten salt or other means is used as given in Fig.1. The dehydrated salt or hydroxide is placed in the Chemical storage tank 35, which is connected to the heat generation tank 36 by the help of the motor 37. Water pipe 21from water tank 42 is also connected to heat generation tank 36 with a motor 38. The heat generation tank 36 is surrounded by hot water reservoir 40. Hot water circulation pipe 22from hot water reservoir 40, is connected to each of the surface/flat vessels 1 from below through motor 39.Heat Generation Tank36 is connected to the water heater 41 which contains the water tank 42 as mentioned above. The water heater 41 is finally connected to the dehydrating vessels 43. Dehydrating vessels are simple vessels with larger surface area covered by transparent medium like glass, plastic etc., where the hydrated salts or hydroxides are evaporated by the direct sunlight to store the heat from sunlight. The dehydrated salts or hydroxides from vessels 43 are kept for longer storage or reused by transferring those salts or hydroxides to storage tank 35.

Furthermore, where the heat from lakes, seas or oceans with frozen upward layer during winter are to be used as given in Fig. 4 or from hot water sources like hot springs lakes etc are to be used as in Fig. 5, the surface/flat vessels 1 are dipped in the lakes, seas or oceans. As in Fig.4 or 5, the vessels dipped inside water here are also connected to the outward pipe 16 from liquid re-input section 23 and the pipe15 connected to the liquid chamber through the Liquid-vapor phase valve 26.

According to my invention, the liquid (or solid or gas) is placed in the flat surface vessel/s 1 completely enclosed, which is allowed to boil (or sublime or pressurize) in the presence of heat. The vessels 1 can be heated through direct sunlight [Fig 1,2, 3] or other means like heated water [Fig. 1] or dipped in lakes or ocean [Fig. 4, 5] or even by other sources e.g. hydrogen gas, natural gas, fossil fuels, wastes, etc. However using sources that can give high temperatures the vessels 1 shall not require the larger surface area. As and when the liquid boils (or the solid sublimes or gas pressurizes) the vapor passes through the pipe15 to the Liquid chamber 2 through Liquid gas phase valve 26.The Liquid chamber 2 is very high totally filled with the same liquid or other liquid as said. At the upper part of the liquid chamber there is a turbine called liquid turbine 8 being immersed in liquid. With the upward flow of the liquid vapor the liquid turbine8 rotates. The rotated turbine rotates the axle 12. The rotated axle in turn rotates and generates electricity from generator 13supported by tower 14.

On the other hand, from the Liquid chamber 2the vapor goes to the top to the Liquid chamber2 above the turbine 8and meets the Gas Chamber 5. In Fig. 1, 3, 4 or 5, as the pressure of gas in the gas chamber 5 increases and overcomes the weight of the liquid in liquid chamber 3 at gas-liquid section, the gas passes to the liquid chamber 3 through valve 27. At the top of the liquid chamber3, the turbine 9 rotates as turbine 8 and the vapor is passed to the gas chamber 6. Again when the pressure in the gas chamber 6 exceeds the weight of the liquid at the gas-liquid section the gas enters into another liquid chamber 4 through valve 28. At the upper part of the liquid chamber 4the vapor rotates the turbine 10 and then the gas enters the gas chamber 7. The turbine 9 and turbine 10 are also connected to the axle 12 to generate electricity, The liquid chamber and gas chamber series can be further increased. In this way, the gas(Vapor) passes to final gas chamber(here gas chamber 7).

In the gas chamber 7, the pressure of vapor increases with time. The vapor with increased pressure passes to the condenser through Gas turbine 11 and cylinder 32.The gas passes to the condenser 31 through cylinder 32 to control pressure the size of which depends upon the temperature of the input energy and rate of condensation. For lower condensation and higher evaporation larger cylinder is required. As for instance, if high temperature heat energy like hydrogen gas or others is applied on the operating liquid say di-chloro methane with boiling point 39.6 degree Celsius then, the pressure may increase rapidly then the condenser's capacity. So the cylinder may hold the vapor for some time before condensation. The gas turbine 11 is also connected to the axle 12 that generates electricity when rotates. Now the gas passes to the condenser 31. On condenser31, the gas enters to the multiple number of pipes 33 through pipe 17. The multiple number of pipes acting as inter-connection medium between the vapor and the liquid in the condenser 31 are maintained to increase the surface area of the vapor to contact with outer low temperature liquid (generally water or other liquid/s or gases based on the temperature requirement) in the condenser31. The temperature of water (or other liquid or others) in the condenser 31 is lower than the temperature of vapor in the multi pipes33.So, the vapor condenses transferring heat to the water (or other liquid/s) in the condenser31.

Finally, the condensed vapor in liquid form (or solid or dense gas depending upon the nature of material to be evaporated or sublimed or pressurized inside the surface/flat vessels 1) in condenser multi-pipes 33, moves to liquid re-input section23through condenser out pipe 18 and liquid input valve 29. When the weight of the condensed liquid in liquid re-input section 23 and condenser-out-pipe 18 kept vertical, is greater than the weight of the washers and the pressure above the washer24, it pushes the washer25 along with washer 24 gradually upwards. As the washer 24 is being pushed up gradually to the pusher 34, the weight of the condensed liquid in the outward pipe 18 of the condenser 31 increases, and the washer is further pushed upward to the switching part of pusher which when touched by washer 24 starts the flow of electricity to the motor of pusher connected to the external circuit. The pusher pushes the washer 24 along with 25 downwards and expels the liquid in section 23 outwards. When the pusher pushes the washer 24 to minimum level, the switching of the power to the motor of pusher is off and the pusher stops pushing. The washers again move up gradually as before due to increasing weight of condensed liquid in vertical liquid out pipe 18 entering in section 23. Thus, there is upward and downward movement of both the washers 24 and 25 with the continuous flow of the condensed liquid accumulated in the liquid re-input section 23 outwards to the pipe 16through valve 30and then to surface vessel/s 1. The condensed vapor can be re-input to the vessels through application of external motor.

In this manner, as long as there is heat supply in the vessel/s 1, there is continuous evaporation and condensation and the system generates electricity through the generator13 that contains an alternator rotated by the axle 12. The mechanical or electrical energy produced due to the evaporation and condensation process is highly increased using the buoyancy factor that depends upon the height of the tower chamber i.e. the height to which the gases rises in the liquid. The gas can be raised in one liquid chamber to a very tall height or a number of times to small height by maintaining different liquid-gas chambers between evaporation and condensation process.

Here, buoyancy factor is used to increase efficiency. With the buoyancy factor, if anything that is lighter than the liquid in which it is immersed is allowed to move freely, it moves in upward direction with the force equal to the weight of the liquid displaced by the free floating material & height of the liquid. Here, the free floating material is the vapor produced during the evaporation. The heat energy falling on the Vessel/s evaporates the liquid in the vessel/s depending upon the intensity of heat energy, surface area, boiling point of the liquid, mass of liquid and the enthalpy of vaporization of the liquid. The vapor acts as the immersed material with density lower than the liquid. There is a flow of vapor in upward direction to the top of the Liquid Chamber/s. Here the upward flowing vapor carries the energy that depends upon the weight of the liquid displaced and the height of the turbine. The more the height of the turbine the more the vapor accelerates in upward direction due to continuous upward force called buoyancy force acting on it.

The system is capable to generate excess energy using the buoyancy factor because of the difference in the volume of the matter input at bottom level and the volume of matter raising brought about by the external thermal energy. Most of the buoyancy/gravity mechanisms fail because the energy obtained from raising the low density matter in the liquid should be equally used to input the matter at the bottom of the liquid so as to make it continuous. Or in other words energy gained is equal to energy loss. Say, in a liquid of density 'd' and height 'h', a low density matter with weight 'w' and volume 'v' is input at bottom. It accelerates in upward direction due to buoyancy force. And the energy obtained is equal to the weight of liquid displaced to the height of liquid less weight of the matter raising. Gravitational force pulls the matter downward.

So,

$$\text{Energy gain} = [(v*d)*g*h] - w*h \qquad (i)$$

$$[\text{Energy} = \text{mass of liquid displaced} * \text{acceleration due to gravity} * \text{height}]\&$$

$$[\text{Mass} = \text{volume} * \text{density}]$$

Again when we input the same matter from the lowest level to continue the process there is energy input which is energy loss. This input energy loss is energy obtained from the matter falling from the raised height less energy spent on input due to the change in the volume of the whole liquid at top when we put the same matter at the same pressure of liquid at bottom. Or change in pressure at bottom due to rise of volume at top. The loss energy is also the same.

$$\text{Energy loss} = -[(P*v) - w*h]$$

$$[\text{Energy on changing volume} = \text{Pressure}* \text{ change in volume of liquid} = \text{change in pressure due to}$$

$$\text{rise of liquid then previous height} * \text{volume of matter}]$$

We know that,

$$\text{Pressure} = \text{Force}/\text{area} = \text{weight of displaced liquid}/\text{area of liquid displaced for given structure.}$$

$$= (v*d)*g/a$$

Therefore,

$$\text{Energy loss} = ((v*d) * g/a) *v$$

$$[\text{Here, height (h)} = \text{volume (v)}/\text{area (a)}]$$

$$\text{So again, Energy loss} = - [[(v*d) *g*h] - w*h] \qquad (ii)$$

Thus energy gain = energy loss (i) and (ii)
However under our system, the input material at the bottom is liquid with less density which is converted to vapor by the external thermal energy before allowing it to rise. Now the vapor of same mass as input but multiple times lesser density or higher volume is made to rise to certain height and obtain the increased energy from buoyancy. The increased energy is because of the difference in volume of the input matter (condensed liquid) and rising matter (evaporated vapor). And the increment is equal to the times of volume of vapor that is allowed to rise and volume of condensed liquid input at bottom.
Say in above equation, the volume of vapor is 'n' times of the volume of liquid then,

$$\text{Energy gained (from vapor rise)} = (n*v*d) *g * h \qquad \text{(iii)}$$

Let, volume of vapor is n times volume of liquid of same mass

Or,

$$n = Vv/Vl = Dl / Dv \qquad \text{[i.e. density of liquid to vapor]}$$

As the vapor is converted to liquid before input, so,

$$\text{Energy loss (on liquid input)} = \Delta P*v$$

$$= [(v*d*g)/a]*v$$

$$= [v*d*g*h]$$

$$\text{Energy gained/energy loss} = [(n*v*d*g*h)/(v*d*g*h)] = n$$

$$\text{And net energy gained} = [v*g*d*h] *(n-1)$$

$$\text{And net power} = [((v*d)*g*h)*(n-1)]/t$$

Here multiplication of volume and density is the mass which when multiplied by acceleration due to gravity is the weight so,

$$\text{Net Energy} = w * h (n -1)$$

$$\text{Net Power} = w * h (n-1)/t$$

Where, t is the time required for converting the liquid into vapor along with the rising of the vapor to the height or conversion of vapor to liquid and input of liquid whichever is earlier.

Thus energy gained is number of times the volume of vapor greater than the volume of liquid. However if two different liquids are used the density of both the liquids affect output. The vapor displaces multiple times of the liquid input at the height where turbine is kept. The energy rotating the turbine can thus be calculated by the weight of the mass displaced and the height at which the turbine is situated. Or in other words the potential energy of the liquid displaced at the height of turbine due to vapor less the potential energy of liquid displaced at that height on input of condensed liquid is the total energy produced.

$$\text{Energy generated on liquid Turbine (E1)} = \text{Weight of liquid displaced (W)} * \text{Height of the turbine (H)} * (\text{proportion of density of vapor and liquid} - 1)$$

This is given by:

$$\text{Net Energy (E1)} = \text{energy generated} - \text{energy lose}$$

$$= [w * h] * [(Dl/Dv)-1]$$

Here, the weight of liquid that is converted in to vapor depends upon the latent heat of vaporization of the liquid, rate of energy falling per unit time and area, surface area of evaporating vessels, acceleration due to gravity, density of liquid and density of vapor.

Now the weight of the liquid displaced on evaporation is calculated as below:

$$W = \frac{\text{(Rate of Energy falling on vessel (Ef) * Surface Area (A) * Time(T) *(Densityof liquid)*g}}{\text{Latent heat of Vaporization of the liquid (Lv) * (Density of Vapor)}}$$

Weight of liquid displaced on input of condensed vapor considering same rate of condensation is given by:

$$W = \frac{\text{(Rate of Energy falling on vessel (Ef) * Surface Area (A) * Time(T) *g}}{\text{Latent heat of Vaporization of the liquid (Lv)}}$$

Thus

$$E1 = [(Ef/Lv) * A * T] *g *H * [(Dl/DV)] - [(Ef/Lv) * A * T] *g *H$$

$$E1 = \frac{[Ef *A* T] * g * H * [(Dl/Dv)-1]}{Lv}$$

Moreover, the vapor is condensed by external energy and input to the system with less volume but high density than the vapor phase. During condensation also we can obtain some energy due to change in pressure. Because of condensation the vapor passes from the vapor chamber to condenser, this flow of vapor also generates some energy.

The energy generated due to the change in volume of the gas in gas chamber, through gas turbine, can be calculated as the work done due to the change in volume.

If E2 is the energy generated during time T by the condensation of V volume of gas at the pressure P then, the energy generated can be calculated as:

$$\text{Energy generated in gas turbine (E2)} = \text{Change in Volume* Pressure}$$

$$= \Delta V *P$$
$$= \frac{[Ef * A * T][(1/Dv)-(1/Dl)] * P}{Lv}$$

$$[\text{Rate of condensation} = \text{Rate of evaporation}]$$

$$\text{Total energy generated is given by (TE)} = E1 + E2$$

Total Energy (TE)

$$=\frac{[Ef*A*T]*g*H[(Dl/Dv)-1]}{Lv}+\frac{[Ef*A*T][(1/Dv)-(1/Dl)]*P}{Lv}$$

$$= [(Ef/Lv)*A*T] * g * H* [(Dl/Dv)-1] + [(Ef/Lv)*A*T] [(1/Dv)-(1/Dl)] * P$$

The power is given as below:

$$Power (P) = \frac{Total\ Energy\ (TE)}{Time\ (T)}$$

$$=\frac{[Ef*A*T]*g*H[(Dl/Dv)-1]}{Lv*T}+\frac{[Ef*A*T][(1/Dv)-(1/Dl)]*P}{Lv*T}$$

$$= [(Ef/Lv)*A]*g*H* [(Dl/Dv)-1] + [(Ef/Lv)*A] [(1/Dv)-(1/Dl)]*P$$

The Energy efficiency of the system is given by:

$$Efficiency = \frac{Output\ Energy}{Input\ Energy} * 100\ \%$$

$$= \frac{[(Ef/Lv)*A*T] * g * H [(Dl/Dv)-1] + [(Ef/Lv)*A*T] [(1/Dv)-(1/Dl)] * P}{Ef*A*T} * 100\%$$

$$= \frac{[g*H][(Dl/Dv)-1]+[P][(1/Dv)-(1/Dl)]}{Lv} * 100\%$$

The normal pressure is maintained at condensation chamber so,
Putting P = 101,325 N/m2 and g= 9.8 m/s2

$$Efficiency = \frac{9.8\ H\ [(Dl-Dv)/Dv] + 101,325\ (Dl-Dv)/(Dl*Dv)}{Lv} * 100\%$$

$$= \frac{[Dl-1]}{Dv} * \frac{[9.8\ H + 101325/Dl]}{Lv} * 100\%$$

The efficiency of the system can be increased with the increase in the total output i.e. the energy generated for a given input. For a given liquid, all the factors in the total energy or in Efficiency cannot be changed except the height.
Thus, the efficiency of energy generated is directly related to the height of the tower chamber to which the vapor flows from bottom. Therefore, if the height is increased to the extent required, the efficiency can be increased, even more than 100%.
Moreover, the efficiency is always positive because the density of liquid is always greater than the density of vapor. Therefore, the system works because of the difference in volume of a given mass in vapor and liquid phase and is highly supported by the increase in height.
However, with the increase in height, the pressure at the bottom increases. The increase in pressure at the bottom of the chamber decreases the volume of the vapor. Due to decrease in the volume of vapor the buoyancy force decreases at below and increases gradually as it accelerates upward. Thus the buoyancy force increases gradually bringing meta-acceleration.

For our purpose we can consider the average volume of vapor for considering the mass of liquid displaced.

$$\text{Pressure at the bottom (P2)} = [\text{Weight/area}] + P1$$

$$= \frac{[\text{area} * \text{height} * \text{Density} * \text{acceleration due to gravity}]}{\text{Area}} + P1$$

$$= [\text{height} * \text{density} * g] + P1$$

$$\text{Volume at bottom(Vb)} = \frac{P1 * Vt}{P2}$$

$$= \frac{P1 * Vt}{(Dl * H * g) + P1}$$

$$= \frac{P1 * [Ef/Lv * A * T] / Dv}{[(Dl * H * g) + P1]}$$

$$\text{Volume at top (Vt)} = [Ef/Lv * A * T] / Dv$$

$$\text{Average volume (Va)} = \frac{Vb + Vt}{2}$$

$$= \frac{\frac{P1 * [Ef/Lv * A * T] / Dv}{(Dl * H * g) + P1} + [Ef/Lv * A * T] / Dv}{2}.$$

$$= \frac{[Ef/Lv * A * T] / Dv * [P1/[(Dl*H*g) + P1] + 1]}{2}$$

$$= [Ef/Lv * A * T] / 2Dv * [P1 + (Dl*H*g) + P1]/[(Dl*H*g) + P1]$$

$$= \frac{[Ef/Lv * A * T] [(Dl*H*g) + 2P1]}{2Dv [(Dl * H * g) + P1]}$$

$$= \frac{Vt * [P2 + P1]}{2[P2]}$$

$$= \frac{Vt}{2} + \frac{Vt \, P1}{2P2}$$

Although the average volume decreases with increased pressure, it always remains more than half then at STP.

Here, PI is atmospheric pressure and Vt is also volume of certain mass at the atmospheric pressure so, both are constant for a given input. However, the P2 increases with increased height. Therefore average volume decreases with increased height thereby increasing the density of vapor [Dv].

Decrease in average volume with increased height will have reduction on the generation of electricity and the efficiency of the system.

$$Dv = m/Vt$$

New density is given by,

$$Dv2 = m/Va$$
$$= m/[Vt/2 + Vt/2(P1/P2)]$$
$$= m/[Vt/2 (1 + P1/P2)]$$
$$= m/[Vt/2 + Vt/2[P1/((Dl * H * g)+P1)]]$$

Thus there is increase in density of the vapor, but the density never increase more than twice.

As at a atmospheric pressure PI the volume Vt of the mass "m" is constant.

New efficiency is given by,

$$= \frac{[Dl-1]}{Dv2} * \frac{[9.8 H + 101325/Dl]}{Lv} * 100\%$$

$$\frac{[Vv2-1]}{Vl} * \frac{[9.8 H + 101325/Dl]}{Lv} * 100\%$$

The new density can go up to twice the previous density, or the average volume of vapor may go up to half than that, at the top, the efficiency may fall by 50% of previous where the vapor at the top and bottom was considered same. Even though, it still can reach above 100% with increased height. This height can be attained before the critical temperature and pressure of the vapor of the evaporated and/or sublimed and /or pressurized gas is reached.

Effect of Pressure with increased height on Latent heat of Vaporization

At increasing pressures the density of vapor increases and at the critical pressure the boiling point will be the temperature where the latent heat of vaporization is zero.

Therefore, with the increase in pressure the boiling point increases but the latent heat of vaporization decreases.

Increase in height has the following benefit:
It increases the pressure of the liquid boiling on the vessel. It increases the pressure thereby reducing the latent heat of vaporization which increases the efficiency.

As the more masses are converted to gaseous state with the same heat falling on the surface with the increase in height, the mass of the liquid at that height with volume equivalent to the volume of gas evaporated from the liquid in the vessel, increases. Thus, with increased height the efficiency increases and exceeds 100%. However, the increment is not infinity but limited to critical temperature and pressure of the liquid that is converted to vapor by the use of thermal energy.

The efficiency of pentane liquid at different heights can be seen in the attached Table below:

| Particulars | Figures | Units | S.No. | Height (m) | Pressure of liquid at Vessel (N/M2) | (Effect on Temp.)BP | Power | Eff. | Pressure of liquid at bottom of liquid chamber | Volume at bottom | Volume at Top |
|---|---|---|---|---|---|---|---|---|---|---|---|
| Density of Liquid | 626,00 | KG/m2 | 0 | 1 | 101 344,23 | 36,11 | 9,06 | 1% | 111 125,00 | 0,000843 | 0,00092 |
| Density of water | 1 000,00 | KG/m3 | 1 | 10 | 101 517,33 | 36,16 | 90,62 | 13% | 199 325,00 | 0,000470 | 0,00092 |
| Density of gas | 2,21 | KG/m3 | 2 | 20 | 101 709,65 | 36,22 | 181,24 | 26% | 297 325,00 | 0,000315 | 0,00092 |
| latent heat of vaporization | 343,32 | kj/kg | 3 | 30 | 101 901,98 | 36,27 | 271,86 | 39% | 395 325,00 | 0,000237 | 0,00092 |
| Specific heat capacity | 167,19 | J/mk | 4 | 40 | 102 094,30 | 36,33 | 362,48 | 52% | 493 325,00 | 0,000190 | 0,00092 |
| k of Steel | 36,00 | W/mK | 5 | 50 | 102 286,63 | 36,39 | 453,10 | 65% | 591 325,00 | 0,000158 | 0,00092 |
| Thickness | 0,00 | M | 6 | 60 | 102 478,95 | 36,45 | 543,71 | 78% | 689 325,00 | 0,000136 | 0,00092 |
| Boiling Point | 36,10 | Deg C. | 7 | 70 | 102 671,28 | 36,51 | 634,33 | 91% | 787 325,00 | 0,000119 | 0,00092 |
| Flow Rate | 2,04 | gm/sec | 8 | 80 | 102 863,60 | 36,56 | 724,95 | 104% | 885 325,00 | 0,000106 | 0,00092 |
| Radius | 0,03 | m | 9 | 90 | 103 055,93 | 36,62 | 815,57 | 117% | 983 325,00 | 0,000095 | 0,00092 |
| Room temperature | 20,00 | Deg C. | 10 | 100 | 103 248,25 | 36,68 | 906,19 | 129% | 1 081 325,00 | 0,000087 | 0,00092 |
| latent heat of vaporization | 25,79 | KJ/M | 11 | 110 | 103 440,58 | 36,74 | 996,81 | 142% | 1 179 325,00 | 0,000079 | 0,00092 |
| Heat falling rate | 700,00 | j/m2 | 12 | 120 | 103 632,90 | 36,80 | 1087,43 | 155% | 1 277 325,00 | 0,000073 | 0,00092 |
| accleration due to gravity g | 9,80 | m/s2 | 13 | 130 | 103 825,23 | 36,85 | 1178,05 | 168% | 1 375 325,00 | 0,000068 | 0,00092 |
| atmospheric pressure p | 101 325,00 | N/m2 | 14 | 140 | 104 017,55 | 36,91 | 1268,67 | 181% | 1 473 325,00 | 0,000064 | 0,00092 |
| Auto ignition | 405,00 | Deg C. | 15 | 150 | 104 209,88 | 36,97 | 1359,29 | 194% | 1 571 325,00 | 0,000060 | 0,00092 |
| Explisive limit | 1.8 - 8.4 | % | 16 | 160 | 104 402,20 | 37,02 | 1449,91 | 207% | 1 669 325,00 | 0,000056 | 0,00092 |
| Molar mass | 75,12 | gm/mole | 17 | 170 | 104 594,53 | 37,08 | 1540,52 | 220% | 1 767 325,00 | 0,000053 | 0,00092 |
| Universal Gas constant | 8,31 | | 18 | 180 | 104 786,85 | 37,14 | 1631,14 | 233% | 1 865 325,00 | 0,000050 | 0,00092 |
| | | | 19 | 190 | 104 979,18 | 37,20 | 1721,76 | 246% | 1 963 325,00 | 0,000048 | 0,00092 |
| Latent heat of vaporization | 25,79 | KJ/mole | 20 | 200 | 105 171,50 | 37,25 | 1812,38 | 259% | 2 061 325,00 | 0,000045 | 0,00092 |
| Latent heat of vaporization | 0,34 | KJ/gm | 21 | 210 | 105 363,83 | 37,31 | 1903,00 | 272% | 2 159 325,00 | 0,000043 | 0,00092 |
| Input motor liquid expel | 0,24 | Kg | 22 | 220 | 105 556,15 | 37,37 | 1993,62 | 285% | 2 257 325,00 | 0,000042 | 0,00092 |

Table

Table (continuation)

| Particulars | Avg Vol. | Power | Eff. | Power loss on liquid input | Power loss on liquid input | Motor power req. for every 2.5 min | Net power | Eff. | Gas Turbine Power addition | Total final power | Eff. | Time required in minutes |
|---|---|---|---|---|---|---|---|---|---|---|---|---|
| Density of Liquid | 0,0008839 | 8,66 | 1,24% | 0,03 | 0,36 | 3,83 | 8,63 | 1,23% | 93,69 | 102,32 | 15% | 5,97 |
| Density of water | 0,0006974 | 68,34 | 9,76% | 0,32 | 0,65 | 38,30 | 68,02 | 9,72% | 93,69 | 161,72 | 23% | 5,99 |
| Density of gas | 0,0006199 | 121,50 | 17,36% | 0,64 | 0,97 | 76,61 | 120,86 | 17,27% | 93,69 | 214,56 | 31% | 6,02 |
| latent heat of vaporization | 0,0005808 | 170,77 | 24,40% | 0,96 | 1,29 | 114,91 | 169,81 | 24,26% | 93,69 | 263,50 | 38% | 6,04 |
| Specific heat capacity | 0,0005573 | 218,46 | 31,21% | 1,28 | 1,61 | 153,21 | 217,19 | 31,03% | 93,69 | 310,88 | 44% | 6,06 |
| k of Steel | 0,0005416 | 265,37 | 37,91% | 1,60 | 1,93 | 191,52 | 263,77 | 37,68% | 93,69 | 357,46 | 51% | 6,08 |
| Thickness | 0,0005303 | 311,82 | 44,55% | 1,92 | 2,25 | 229,82 | 309,90 | 44,27% | 93,69 | 403,60 | 58% | 6,10 |
| Boiling Point | 0,0005218 | 357,98 | 51,14% | 2,23 | 2,56 | 268,12 | 355,75 | 50,82% | 93,69 | 449,44 | 64% | 6,12 |
| Flow Rate | 0,0005153 | 403,96 | 57,71% | 2,55 | 2,88 | 306,43 | 401,41 | 57,34% | 93,69 | 495,10 | 71% | 6,14 |
| Radius | 0,0005100 | 449,81 | 64,26% | 2,87 | 3,20 | 344,73 | 446,93 | 63,85% | 93,69 | 540,63 | 77% | 6,17 |
| Room temperature | 0,0005057 | 495,55 | 70,79% | 3,19 | 3,52 | 383,03 | 492,36 | 70,34% | 93,69 | 586,05 | 84% | 6,19 |
| latent heat of vaporization | 0,0005021 | 541,23 | 77,32% | 3,51 | 3,84 | 421,34 | 537,72 | 76,82% | 93,69 | 631,41 | 90% | 6,21 |
| Heat falling rate | 0,0004990 | 586,85 | 83,84% | 3,83 | 4,16 | 459,64 | 583,01 | 83,29% | 93,69 | 676,71 | 97% | 6,23 |
| accleration due to gravity g | 0,0004964 | 632,42 | 90,35% | 4,15 | 4,48 | 497,94 | 628,27 | 89,75% | 93,69 | 721,96 | 103% | 6,25 |
| atmospheric pressure p | 0,0004941 | 677,96 | 96,85% | 4,47 | 4,80 | 536,25 | 673,49 | 96,21% | 93,69 | 767,18 | 110% | 6,27 |
| Auto ignition | 0,0004922 | 723,47 | 103,35% | 4,79 | 5,12 | 574,55 | 718,68 | 102,67% | 93,69 | 812,38 | 116% | 6,29 |
| Explosive limit | 0,0004904 | 768,96 | 109,85% | 5,11 | 5,44 | 612,85 | 763,85 | 109,12% | 93,69 | 857,54 | 123% | 6,31 |
| Molar mass | 0,0004888 | 814,42 | 116,35% | 5,43 | 5,76 | 651,15 | 809,00 | 115,57% | 93,69 | 902,69 | 129% | 6,34 |
| Universal Gas constant | 0,0004875 | 859,87 | 122,84% | 5,75 | 6,08 | 689,46 | 854,13 | 122,02% | 93,69 | 947,82 | 135% | 6,36 |
|  | 0,0004862 | 905,31 | 129,33% | 6,06 | 6,39 | 727,76 | 899,25 | 128,46% | 93,69 | 992,94 | 142% | 6,38 |
| Latent heat of vaporization | 0,0004851 | 950,74 | 135,82% | 6,38 | 6,71 | 766,06 | 944,35 | 134,91% | 93,69 | 1 038,04 | 148% | 6,40 |
| Latent heat of vaporization | 0,0004840 | 996,15 | 142,31% | 6,70 | 7,03 | 804,37 | 989,45 | 141,35% | 93,69 | 1 083,14 | 155% | 6,42 |
| Input motor liquid expel | 0,0004831 | 1041,55 | 148,79% | 7,02 | 7,35 | 842,67 | 1 034,53 | 147,79% | 93,69 | 1 128,23 | 161% | 6,44 |

**Examples:**

As for instance, Say the energy of 330 W is falling per square meter. The Surface Area of the vessel [A] is 1 square meter over which the solar power is falling. Let the time of calculation is one hour. Let the liquid has a latent heat of vaporization of 323kj/kg. Let the density of the liquid is 1323kg/m3 and the density of the vapor is 2.114kg/m3.

$$\text{Now the energy input [EI]} = 330 * 3600 = 1188 \text{ KJ}$$

$$\text{Energy output} =$$

$$= \frac{330 * 1 * 3600 * 1323 * 9.8 * 1}{323 * 1000 * 2.114}$$

$$= 22{,}557.7 \text{ J}$$

The efficiency is given as:

$$\text{Efficiency} = \frac{\text{Output Energy}}{\text{Input Energy}} * 100 \%$$

$$= \frac{22557.7}{1{,}188{,}000} * 100\%$$

$$= 1.9\%$$

In the above example if we increase the height of turbine to say 60 meter, the new calculation would be as follows:

$$\text{Output Energy (OE)} = \frac{330 * 1 * 3600 * 1323 * 9.8 * 60}{323 * 1000 * 2.114}$$

$$= 1{,}353{,}462 \text{ J}$$

The efficiency of the new system comes to 115%

$$\text{Efficiency} = \frac{\text{Output Energy}}{\text{Input Energy}} * 100 \%$$

$$= \frac{1{,}353{,}462}{1{,}188{,}000} * 100\%$$

$$= 114.7\%$$

Here, the surface area of the metal surface in which vapor is enclosed is maintained such a way that it is able to transfer the heat required to condense the vapor to the liquid at the rate the vapor is produced.
Therefore, the heat to be lost during vaporization is equal to the enthalpy of vaporization.
That is, total energy lost is equal to the total energy gained during vaporization.

Heat Lost = Total Energy as above (TE).

$$\text{Surface area (A)} = \frac{Lv * \text{Volume of vapor (V)} * \text{Density of vapor (D)} * \text{thickness of the metal (l)}}{\text{Thermal constant of metal (k)} * \text{Time(t)} * \text{Difference in temperature } (\Delta T)}$$

The system as per my invention works in the condition where the boiling and condensation is possible. Under natural conditions, water has a freezing point of 0 Deg. Celsius so in a condenser water can be used and the boiling point of liquid in the vessel should always be more than that of the liquid in the condenser. If the room temperature is 20 Deg. Celsius, any liquid with the boiling point more than 30 degree can normally be used. Thus with a temperature difference of normally 15 Deg. Celsius between the boiling point of the liquid in the vessel to be boiled and the room temperature at which the liquid in the condenser is not frozen can be used. Generally, we can use water in the condenser and the liquids like di-chloro-methane (Bp. 34.6 Deg. Celsius), Methanol (Bp. 63.4 Deg. Celsius), Ethanol (Bp.74 Degree Celsius) etc. in the vessels. The liquids to be boiled are air locked and do not come in contact with air so the liquids with auto ignition more than 350 Deg. Celsius can be used. The temperature of the vapor will never go in excess of 100 Deg. Celsius.

The boiling liquid is totally inside the pipes and chambers and cannot come in contact with environment so the hazard of the liquids in vapor phase it totally minimized.

From the above we can draw that the electricity generation starts as and when the liquid starts evaporating (boiling), and the boiling point of the liquid used in generally low. Say if we use ethanol the boiling point is about 64 Deg. Celsius which is easily reached in some minutes where the normal temperature is about 30 Deg. Celsius. Or if we use the di-chloro methane with boiling point 34.6 Deg. Celsius, the generation of electricity starts even if the room temperature is around 20 Dec Celsius although there should be enough heat from sun or others.

Or in other words, with sufficient heat energy the power generation starts at low temperature also. This property of the system can be better utilized. Even the places with low sunlight the power generation can be started.

Storage:

Moreover, the storage of energy is possible with those materials that releases low temperature heat energy and can be regained to original form. As and when we dissolve the Sodium hydroxide (NAOH), Calcium Chloride (Cacl2) or Calcium Hydroxide (CaOH2) in water heat energy is released rising the temperature of water to about 80 Degree Celsius or above. Now, with sufficient quantity of such heat releasing materials electrical energy can be generated. Again these materials can be evaporated in sun light or others and reused for production of electrical energy when there is no sunlight.

Similarly various salts have a low melting point which can be used for storage as they store heat equal to latent heat of vaporization and release when crystallize. Moreover, some salts like Sodium acetate (CH3COONa),calcium nitrate (CaNo3) etc, are super-cooled or meta-stable liquid that do not crystallize below their melting points. And on crystallization even at room temperature, they release the heat equal to latent heat of vaporization. So for such salts maintaining of temperature above melting point before using their heat are not required and are thus easier for storage.

Here we take Sodium Hydroxide which is exothermic when dissolved in water. NaOH.H2O releases 21.4 KJ/KG of energy when dissolved in water. It has a capacity of dissolving of 1:1 at 100 Deg. Celsius. So, with the dissolving of 1 kg of sodium hydroxide in 1 liter of water, we can get 548.97 KJ per kg (@21.4 KJ/mol.) of heat energy and as our invention system converts 100% or more of the heat energy to electrical energy so at least 100 percent of energy or 548.97KJ of electrical energy can be considered from 1 kg of dry NaOH. 1MW requires (1MJ * 84,600 sec =) 84,600MJ of energy storage per day. It can be stored in 157.39 Mt of NaOH.

Similarly, considering @16.2 KJ/mol of energy released on dissolving calcium hydroxide on water we can store 1 MW Day of energy in 297.66 MT of CaOH2 and requires dehydrating for reuse (297.66 cubic meter * 0.005 height).

Moreover, considering @ 81.3 KJ/mol (= 739J/gm) of energy released on dissolving calcium chloride on water, we can store 1 MW Day of energy in 116.913 MT.

When sodium acetate is heated above melting point i.e. 58 Degree Celsius it releases a heat energy of 264-289 Kj/kg even at room temperature on crystallization. So to store 1 MW Day of energy 306.5 ton of sodium acetate is required. Moreover, it releases extra heat energy while cooling it can also be utilized efficiently.

When Calcium Nitrate is heated above melting point i.e. 42.7 Degree Celsius it releases a heat energy of 153KJ/Kg (36.1 Kj/mol) even at room temperature on crystallization. So to store 1 MW Day of energy 552.9 ton of sodium acetate is required. Moreover, it releases extra heat energy while cooling it can also be utilized efficiently.

During the winter the ocean surface can go temperature below - 4 Degree Celsius to even -30 Degree Celsius or lower in some northern and southern areas. Due to such low temperature the upper part of seas or ocean is frozen, however there is still water below some thickness of ice which protects the wild life in water. Therefore the temperature of water is certainly above 0 degree Celsius. Considering the liquid Butane which has a boiling point of -1 degree Celsius and melting point of -114 degree Celsius we can use it in our system to generate electrical energy. Here the boiling is done by the water below the ice which is above 0 degree Celsius and condensation can be done on the surface the temperature is generally below -4 degree Celsius no matter it reaches -50 degree Celsius or lower. Enormous energy can be obtained from it. One liter of water has 4.1 kj/kgK. Or in other words one cubic meter of water can have 4 MJ of energy stored with only one degree difference in temperature. Therefore thousands of Megawatts of energy can be easily generated with this vast source.

However, if the temperature above the surface is consistently below -10 degree Celsius or below we can use other liquids for greater efficiency. Say chlorine has a boiling point of -35 Degree Celsius. So if the surface temperature falls persistently below -35 Degree Celsius then chlorine liquid can be used instead of butane. Similarly Iso-propane has boiling point of -10 Degree Celsius which can be used for temperature persisting below -10 degree Celsius. However, for summer seasons these liquids like Butane, Iso-propane, chlorine etc may convert to gases so should be kept in cold storage or storage tanks that can handle the required pressure. And the liquid in our system be changed according to the temperature. Say if it is nearly 20 degree Celsius then, di-chloro-methane (Bp. 39.6 Degree Celsius), pentane (B.p. 36 Degree Celsius) or similar liquid with boiling points in excess of 30 degrees are suitable. And those liquids with low boiling point can again be reused during next winter when the temperature falls below -4 degree Celsius or lower.

In summary it can be said, that claimed invention provides the following uses and benefits:

- the invention converts the heat energy to mechanical energy or electrical energy;

- the heat energy is converted @ 100% or more to mechanical/electrical energy which had never been possible;

- it uses clean energy as solar, geo thermal, hydrogen etc;

- in case of necessity, other waste products, garbage, forestry products or even fossil fuels can also be used to produce heat and convert to mechanical and electrical energy;

- heat loses from machines or other industries can be utilized;

- it converts low temperature heat energy to 100% or more electrical or mechanical energy so easy method of storage can be used;

- easily available and environment friendly chemicals can be used to store energy at low cost and capital;

- due to low cost and capital for energy storage huge energy back up say for days or months or more can be made for the regions or periods without sunlight or other reasonable heat sources;

- it can be utilized to convert mass available solar energy into mechanical/electrical energy and fulfill the mass energy needs of the world;

- it solves the future energy crises that the world is facing, for any foreseeable future;

- it helps in increasing the clean and renewable energy production and consumption to a huge percent and reduces global warming;

- it helps to reduce pollution by decreasing the increased use of black energy and also utilizing the wastes and garbage for energy production;

- it helps to fulfill the energy needs the fin-tech system is facing. The system may require as much energy by 2020 AD that the whole world is using today;

- it helps to harness the vast energy of the ocean during winter where there is no sunlight and the temperature is lower than 0 Degree Celsius to even -30 Degree Celsius or less.

**Claims**

1. A process of generation of mechanical and electrical energy from heat energy, wherein
   the process is performed through the process of evaporation or sublimation or pressurization and condensation or depressurization of liquid and/or solid and/or gas along with the application of buoyancy factor to increase the efficiency of the process
   and comprising the allowing the vapor, obtained through a liquid when boiled or solid when sublimed or gas when pressurized by the input of heat energy at required temperature relevant point of the liquid, to rise at a higher level in a liquid such that
   due to buoyancy the gas is accelerated above and the energy obtained is increased as the gas rises to the height at which the turbine is kept immersed in the liquid and the gas passes through the turbine and the vapor is condensed/depressurized by the help of liquid kept in the condenser the temperature of which under normal conditions do not exceed the boiling point of the liquid inside the vessels that is to be evaporated and condensed or the temperature of the vapor boiled, evaporated, pressurized or sublimed or condensed or depressurized through any other possible means.

2. The process according to claim 1, wherein the generation is performed through the process of evaporation or sublimation and condensation and by the application of buoyancy factor to increase the efficiency of the process using a liquid or more that can boil easily by the input heat energy and temperature and one or more liquid in the condenser the temperature of which under normal conditions do not exceed the boiling point of the liquid inside the vessels that is to be evaporated or sublimated and condensed.

3. The process according to claim 1, wherein the process is performed through the process of evaporation or sublimation and condensation and by the application of buoyancy factor to increase the efficiency of the process and along with the generation of the energy due to the flow of the vapor between evaporation or sublimation and condensation process using a liquid or more that can boil easily as per the input heat energy and temperature and more than one liquid in the condenser the temperature of which under normal conditions do not exceed the boiling point of the liquid inside the vessels that is to be evaporated or sublimated and condensed.

4. The process according to claim 1, wherein the process is performed through the process of evaporation or sublimation and condensation and by the application of buoyancy factor to increase the efficiency of the process along with the generation of the energy due to the flow the vapor between evaporation and condensation process using one or more liquid/s that can boil easily or solid/s that can sublime or gas that can be pressurized as per the input heat energy and temperature and one or more liquid/s or gases in the condenser the temperature of which under normal conditions do not exceed the boiling point of the liquid inside the vessels that is to be evaporated or sublimated and condensed or freezed, where the heat energy is obtained from the sunlight directly falling in the flat vessels lying over the ground or from the water in the seas or ocean which are above 0 degree Celsius when the temperature on the surface is below minus four degree Celsius or heat obtained from different sources like hydration and dehydration of salt hydrates or hydroxides etc or latent heat of vaporization of salts etc. or even fossil fuels, hydrogen and other gases, garbage or any other sources and means.

5. The process according to claim 1, wherein the process is performed through the process of evaporation or sublimation and condensation and by the application of buoyancy factor to increase the efficiency of the process along with the generation of the energy due to the flow the vapor between evaporation and condensation process using a liquid or more that can boil easily as per the input heat energy and temperature and more than one liquid in the condenser the temperature of which under normal conditions do not exceed the boiling point of the liquid inside the vessels that is to be evaporated or sublimated and condensed, where the heat energy is stored in different sources like hydration and dehydration of ionic compounds like salt hydrates, hydroxides etc. or heat stored as latent heat of vaporization of salts on melting, heat stored in wastes, heat stored in hot water, fossil fuels, forest products, hydrogen gas or any other means or sources of storage used to generate heat etc. for such generation of mechanical and electrical energy.

6. The process according to claim 1, wherein the process is performed through the process of evaporation or sublimation and condensation and by the application of buoyancy factor to increase the efficiency of the process along with the generation of the energy due to the flow of the vapor between evaporation and condensation process using a liquid/solid/gas or more that can boil/sublime/pressurize easily or as per the input heat energy and temperature and more than one liquid in the condenser the temperature of which under normal conditions do not exceed the boiling point of the liquid inside the vessels that is to be evaporated or sublimated and condensed, where the heat energy is stored in different sources like hydration and dehydration of ionic compounds like salt hydrates, hydroxides etc. or heat stored as latent heat of vaporization of salts on melting, heat stored in wastes, heat stored in hot water, fossil fuels, forest products, hydrogen gas or any other means or sources of storage used to generate heat and/or transported to other places for such generation of mechanical and electrical energy.

7. The process according to claim 1, wherein the process is performed through the process of evaporation or sublimation and condensation and by the application of buoyancy factor to increase the efficiency of the process along with the generation of the energy due to the flow the vapor between evaporation and condensation process using a liquid or more that can boil easily as per the input heat energy and temperature and more than one liquid in the condenser the temperature of which under normal conditions do not exceed the boiling point of the liquid inside the vessels that is to be evaporated or sublimated and condensed, where the heat energy is stored in different sources like hydration and dehydration of ionic compounds like salt hydrates, hydroxides etc. or heat stored as latent heat of vaporization of salts on melting, heat stored in wastes, heat stored in hot water, fossil fuels, forest products, hydrogen gas or any other means or sources of storage used to generate heat and/or transported to other places for such generation of mechanical and electrical energy or the machines, equipment, chemicals, or any other materials are used in production, transportation of and operation for such heat storage or generation of mechanical and electrical energy including but not limited to the liquids, devices, equipment and other structures and materials, if any.

8. The process according to claim 1, wherein the process is performed through the process of evaporation or sublimation and condensation and by the application of buoyancy factor, where the evaporated or sublimated vapor is allowed to rise to a certain height to increase the efficiency of the process, the vapor being generated using a liquid that can boil or solid that can sublime easily as per the input heat energy and one or more liquid in the condenser the temperature of which under normal conditions, do not exceed the boiling point of the liquid inside the vessels that is to be evaporated or sublimated and condensed so as to condense the vapor.

9. The process according to claim 1, wherein the process is performed through the process of evaporation or sublimation and condensation and by the application of buoyancy factor, where adjusting the temperature conditions any liquid and/or solid and/or gas can be used for evaporation or sublimation or increment in pressure and condensation and/or sublimation and/or freezing of the vapor/liquid due to evaporation and/or sublimation and/or increased pressure of solid and/or liquid and/or gas passing through the liquid for buoyancy factor increase in efficiency on keeping turbine at increased height/s and any materials be used for the evaporating or sublimating or increased pressure and condensing and/or freezing depending upon the favorability of liquid and solid used in evaporation or sublimation and condensation and any types of energies or techniques be used to produce heat for evaporation or sublimation and condensation and any type of the equipment or technique used to convert mechanical energy produced from turbine to electrical or any other energies.

10. The process according to claim 1, along with all the drawings, calculations and the embodiments are claimed.

Fig. 1

Fig. 2

Fig. 3

Fig. 4

Fig. 5

----------Hot water----------

----------Hot water--------
(> Surface temperature)

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 223 532 B1 (BRASSEA-FLORES ANGEL [US]) 1 May 2001 (2001-05-01) * column 7, line 44 - column 9, line 25; figures 3,4 * | 1-10 | INV. F01K7/00 F01K27/00 F03B17/02 F22B1/00 F01K3/00 |
| X | DE 12 859 C (E.J. HAHN) 22 February 1881 (1881-02-22) * right-hand column, line 1 - line 23; figure 4 * | 1-10 | |
| X | US 2006/064975 A1 (TAKEUCHI AKIO [JP]) 30 March 2006 (2006-03-30) * paragraphs [0025] - [0037]; figure 1 * | 1-10 | |
| A | WO 2014/208835 A1 (KOREA ENERGY RESEARCH INST [KR]) 31 December 2014 (2014-12-31) * figure 1 * | 1-10 | |
| A | US 4 041 710 A (KRAUS ROBERT AUGUST ET AL) 16 August 1977 (1977-08-16) * figure 2 * | 1-10 | |
| A | WO 85/02226 A1 (SOLMECS CORP NV [NL]) 23 May 1985 (1985-05-23) * figures 8,9 * | 1-10 | TECHNICAL FIELDS SEARCHED (IPC) F01K F03B F22B |
| A | DE 36 26 158 A1 (HOELTER HEINZ [DE]) 3 March 1988 (1988-03-03) * column 1, lines 25-47 * | 1-10 | |

The present search report has been drawn up for all claims

| Place of search | Date of completion of the search | Examiner |
|---|---|---|
| Munich | 30 January 2020 | Röberg, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 8545

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2020

| Patent document cited in search report | | Publication date | Patent family member(s) | | Publication date |
|---|---|---|---|---|---|
| US 6223532 | B1 | 01-05-2001 | NONE | | |
| DE 12859 | C | 22-02-1881 | NONE | | |
| US 2006064975 | A1 | 30-03-2006 | AT | 402338 T | 15-08-2008 |
| | | | CN | 1692225 A | 02-11-2005 |
| | | | EP | 1566542 A1 | 24-08-2005 |
| | | | JP WO2005045241 A1 | | 17-05-2007 |
| | | | US | 2006064975 A1 | 30-03-2006 |
| | | | WO | 2005045241 A1 | 19-05-2005 |
| WO 2014208835 | A1 | 31-12-2014 | KR | 20150001248 A | 06-01-2015 |
| | | | WO | 2014208835 A1 | 31-12-2014 |
| US 4041710 | A | 16-08-1977 | NONE | | |
| WO 8502226 | A1 | 23-05-1985 | AU | 3615084 A | 03-06-1985 |
| | | | EP | 0161297 A1 | 21-11-1985 |
| | | | JP | S61500622 A | 03-04-1986 |
| | | | WO | 8502226 A1 | 23-05-1985 |
| | | | ZA | 8408762 B | 25-06-1986 |
| DE 3626158 | A1 | 03-03-1988 | NONE | | |

EPO FORM P0459

For more details about this annex : see Official Journal of the European Patent Office, No. 12/82

**EP 3 628 830 A1**

**Patent documents cited in the description**

- US 9297366 B2
- US 8794002 B2
- US 8011182 B2